# EUROPÄISCHE PATENTSCHRIFT

(11) **EP 3 944 939 B1**
(45) Veröffentlichungstag und Bekanntmachung des Hinweises auf die Patenterteilung: **03.09.2025**
(21) Anmeldenummer: 20188974.8
(22) Anmeldetag: 31.07.2020
(51) Int. Cl.: B27D 5/00

(54) **WERKZEUGEINHEIT UND SCHALTBARES WERKZEUGSYSTEM FÜR EINE SOLCHE WERKZEUGEINHEIT**
TOOL UNIT AND SWITCHABLE TOOL SYSTEM FOR SUCH A TOOL UNIT
UNITÉ D'OUTILS ET SYSTÈME D'OUTILS COMMUTABLES POUR UNE TELLE UNITÉ D'OUTILS

(43) Veröffentlichungstag der Anmeldung: 02.02.2022
(73) Patentinhaber: Ledermann GmbH & Co. KG, 72160 Horb am Neckar (DE)
(72) Erfinder: GALLI, Oliver, 71154 Nufringen (DE); SITZLER, Benjamin, 72172 Sulz (DE)
(74) Vertreter: Zurhorst, Stefan

(56) Entgegenhaltungen:
- EP-A2- 2 492 071
- DE-U1- 202010 010 704

## Beschreibung

Die Erfindung betrifft eine Werkzeugeinheit zum Bearbeiten von Kanten eines Werkstückes mit den Merkmalen nach dem Oberbegriff des Anspruchs 1 sowie ein schaltbares Werkzeugsystem gemäß dem Oberbegriff des Anspruchs 8. Eine solche Werkzeugeinheit ist aus dem Dokument DE 20201010704 U1 bekannt.

Aus der EP 2 492 071 B1 ist eine solche Werkzeugeinheit zum Bearbeiten von Kanten eines Werkstückes bekannt. Diese Werkzeugeinheit erstreckt sich entlang einer Drehachse und umfasst einen Werkzeugkopf, einen Antriebsmotor zum drehenden Antrieb des Werkzeugkopfes um die Drehachse sowie einen Schaltantrieb für den zwischen verschiedenen Schaltzuständen umschaltbaren Werkzeugkopf. Der Werkzeugkopf weist einen ersten Werkzeugabschnitt mit einem Satz von über den Umfang verteilten ersten Schneiden und einen zweiten Werkzeugabschnitt mit einem Satz von über den Umfang verteilten zweiten Schneiden auf. Die zweiten Schneiden sind in Umfangsrichtung gesehen zwischen den ersten Schneiden positioniert. Der zweite Werkzeugabschnitt ist relativ zum ersten Werkzeugabschnitt in Richtung der Längsachse mittels des Schaltantriebs zwischen einer passiven Position und einer aktiven Position hin und her verfahrbar, wobei die zweiten Schneiden in der passiven Position gegenüber den ersten Schneiden axial zurückgezogen sind und wobei die zweiten Schneiden in der aktiven Position zwischen den ersten Schneiden hindurch axial hervorstehen.

Der Werkzeugkopf befindet sich an einem axialen Ende des Antriebsmotors, während der Schaltantrieb am gegenüberliegenden axialen Ende positioniert ist. Der Schaltantrieb kann elektropneumatisch, elektrohydraulisch und/oder elektromagnetisch ausgeführt sein und wirkt auf einen Schiebezylinder, dessen Bewegung mittels einer in Längsrichtung durch den Antriebsmotor hindurch geführten Antriebsspindel auf den gegenüberliegenden beweglichen Werkzeugabschnitt einwirkt und dessen Schaltposition bestimmt. Durch Umschaltung kommen verschiedene Fräsprofile zum Einsatz. Durch die gewählte Antriebskonfiguration sollen die Möglichkeiten der Ausgestaltung und damit die Flexibilität der Mehrprofilfräsvorrichtung erhöht werden.

Die genannten Ziele werden jedoch durch einen großen mechanischen Aufwand mit komplexer und hochintegrierter Konstruktion erkauft. Drehantrieb und Schaltantrieb müssen koaxial ineinander geführt und gegeneinander gelagert werden. Neben dem damit einhergehenden hohen Bau- und Kostenaufwand entsteht an den Lagerstellen auch Verschleiß mit nachfolgendem Wartungsaufwand. Im Schadensfall muss die Einheit in ihrer Gesamtheit ausgetauscht bzw. instandgesetzt werden. Standardisierte und damit preisgünstige Antriebe können nicht zum Einsatz kommen.

Der Erfindung liegt die Aufgabe zugrunde, eine Werkzeugeinheit der eingangs beschriebenen Gattung konstruktiv deutlich zu vereinfachen und dabei Verschleißerscheinungen sowie den daraus folgenden Wartungsaufwand zu verringern.

Diese Aufgabe wird durch eine Werkzeugeinheit mit den Merkmalen des Anspruchs 1 gelöst.

Der Erfindung liegt des Weiteren die Aufgabe zugrunde, ein schaltbares Werkzeugsystem für eine solche Werkzeugeinheit anzugeben, welche bei einfachem Aufbau und zuverlässiger Funktion an einem standardisierten Antriebsmotor zum Einsatz kommen kann.

Diese Aufgabe wird durch ein schaltbares Werkzeugsystem mit den Merkmalen des Anspruchs 8 gelöst.

Nach der Erfindung ist vorgesehen, dass der Schaltantrieb mindestens einen Elektromagneten und einen im Wirkungsbereich des Elektromagneten angeordneten Betätigungsanker aus einem magnetisch anziehbaren Material umfasst. Der mindestens eine Elektromagnet ist in axialer Richtung zwischen dem Werkzeugkopf und dem Antriebsmotor positioniert und an einem Gehäuseteil des Antriebsmotors drehfest befestigt. Der Betätigungsanker ist mit dem zweiten Werkzeugabschnitt fest verbunden, wobei zwischen dem mindestens einen Elektromagneten und dem Betätigungsanker sowohl in der passiven Position als auch in der aktiven Position ein Spalt verbleibt.

Das hierzu korrespondierende schaltbare Werkzeugsystem umfasst den genannten Werkzeugkopf sowie den genannten Schaltantrieb. Der mindestens eine Elektromagnet weist Befestigungsmittel zur drehfesten Befestigung an einem Gehäuseteil des Antriebsmotors in einer axialen Position zwischen dem Werkzeugkopf und dem Antriebsmotor auf. Der entsprechende Werkzeugkopf weist eine Befestigungsschnittstelle zur Befestigung an der Antriebswelle des Antriebsmotors auf.

In der erfindungsgemäßen Ausgestaltung befinden sich sowohl der schaltbare Werkzeugkopf als auch der zugehörige Schaltantrieb auf der gleichen Seite der Werkzeugeinheit bzw. des Antriebsmotors, so dass auf aufwändige Übertragungsmittel verzichtet werden kann. Infolge der Befestigung des Elektromagneten am Gehäuseteil des Antriebsmotors und der Befestigung des Betätigungsankers am zweiten Werkzeugabschnitt entsteht zwar eine drehende Relativbewegung. Hierzu muss jedoch keine eigenständige Lagerung zwischen den beiden Baugruppen bereitgestellt werden, da eine ausschließliche Befestigung des Werkzeugkopfes an der Antriebswelle des Antriebsmotors ausreicht. Damit ist der Werkzeugkopf allein mittels der Lagerung der Antriebswelle gelagert, während mechanisch unabhängig davon der Elektromagnet drehfest am Motor gehalten ist. Insbesondere infolge des genannten Spaltes zwischen Elektromagnet und Betätigungsanker fehlt es an einer unmittelbaren Berührung zwischen beiden Baugruppen, so dass die Anordnung in dieser Hinsicht verschleißfrei ist. Das schaltbare Werkzeugsystem kann an einen beliebigen Antriebsmotor montiert werden. Vorhandene Antriebsmotoren können ohne Weiteres mit dem erfindungsgemäßen schaltbaren Werkzeugsystem nachgerüstet werden, da kein Eingriff in das Innere des Antriebsmotors erforderlich ist.

Die Übertragung der elektromagnetischen Anziehungskräfte erfolgt berührungsfrei durch den genannten Spalt. Dieser muss nur sicherstellen, dass es zu keiner Reibung kommt, so dass er entsprechend klein dimensioniert sein kann. In der Folge können große Magnetkräfte aufgebracht werden, welche ein zuverlässiges Umschalten zwischen den verschiedenen Schaltzuständen bzw. zwischen der aktiven und der passiven Position sicherstellen. Außerdem kann die erreichte Schaltposition zuverlässig gehalten werden.

Es kann zweckmäßig sein, den Betätigungsanker mit permanentmagnetischen Eigenschaften unter Einsatz eines entsprechenden hartmagnetischen Materials zu versehen. Hieran angepasst, kann der Elektromagnet in wechselnden Polungen betrieben werden, was zu einem Anziehen bzw. Abstoßen des Permanentmagneten führt. In der Folge können die aktive und die passive Position allein durch Magnetkraft angefahren und gehalten werden. In bevorzugter Weiterbildung ist der Betätigungsanker jedoch aus einem weichmagnetischen Material gefertigt. Zwar können hierauf nur magnetische Anziehungskräfte mit nur einer einzigen entsprechenden Schaltrichtung aufgebracht werden, so dass zusätzliche Maßnahmen für einen Schaltvorgang in der Gegenrichtung zu ergreifen sind. Die Anwendung eines weichmagnetischen Materials eröffnet jedoch eine große Auswahl an infrage kommenden Werkstoffen, welche beispielsweise Werkzeugstahl einschließen. Damit kann eine preisgünstige und dennoch robuste Konstruktion erzielt werden.

In einer vorteilhaften Ausführungsform ist der zweite Werkzeugabschnitt mittels eines Druckfederelementes vom Schaltantrieb fortweisend in Richtung der aktiven Position vorgespannt. Der Schaltantrieb ist dazu ausgelegt, bei Aktivierung den zweiten Werkzeugabschnitt gegen diese Vorspannkraft des Druckfederelementes aus der aktiven Position in die passive Position anzuziehen. Die genannte Anordnung kommt mit einem nur minimalen Steueraufwand aus. Die Polungsrichtung des Elektromagneten ist unerheblich. Für den Elektromagneten sind nur die beiden Betriebszustände "bestromt" und "nicht bestromt" von Bedeutung, wobei der Elektromagnet im bestromten Zustand den zweiten Werkzeugabschnitt zurück in die passive Position zieht und dort hält, während das Druckfederelement im nicht bestromten Zustand des Elektromagneten den zweiten Werkzeugabschnitt nach vorne in die aktive Position drückt und dort hält. Bei minimalem Aufwand sind ein zuverlässiges und wartungsfreies Umschalten zwischen den beiden Schaltzuständen sowie ein zuverlässiges Halten des erreichten Schaltzustandes möglich.

Für die konstruktive Ausgestaltung kommen verschiedene Möglichkeiten in Betracht. Bevorzugt ist jedoch das Druckfederelement als konzentrisch zur Drehachse angeordnete Wellenfeder ausgebildet. Bei geringem axialem Bauraum können hohe Schalt- und Haltekräfte erzielt werden. Die koaxiale Bauform vermeidet ein Kippen und Verkanten.

Sinngemäß das Gleiche gilt auch für eine bevorzugte Ausführungsform, bei der der Elektromagnet als Ringmagnet ausgeführt ist, bei der der Betätigungsanker korrespondierend zum Ringmagnet ringförmig gestaltet ist und bei der der Ringmagnet sowie der ringförmige Betätigungsanker konzentrisch zur Drehachse angeordnet sind.

Ein Ausführungsbeispiel der Erfindung ist nachfolgend anhand der Zeichnung näher beschrieben. Es zeigen:
- Fig. 1: in einer perspektivischen Ansicht den Arbeitsbereich einer erfindungsgemäß ausgeführten Werkzeugeinheit mit Werkzeugkopf, Antriebsmotor und Schaltantrieb,
- Fig. 2: in einer Seitenansicht die Werkzeugeinheit nach Fig. 1 mit in seine passive Position zurückgezogenem zweitem Werkzeugabschnitt,
- Fig. 3: die Anordnung nach Fig. 2 mit in aktiver Position befindlichem zweitem Werkzeugabschnitt, und
- Fig. 4: in einer Schnittdarstellung das schaltbare Werkzeugsystem nach den Fig. 1 bis 3 in beiden Schaltzuständen zum Fräsen zweier verschiedener Kantenprofile.

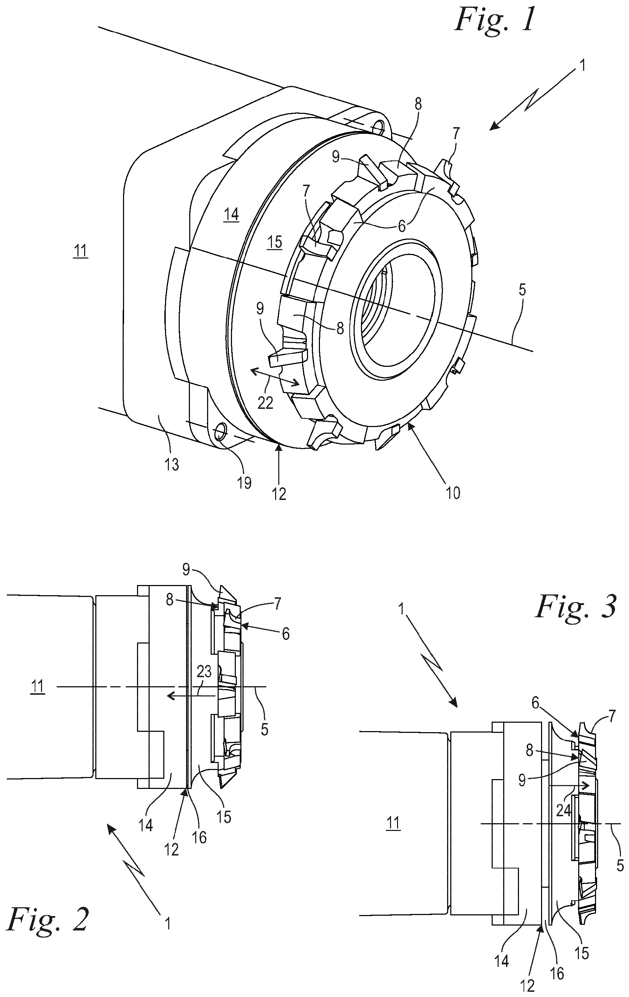

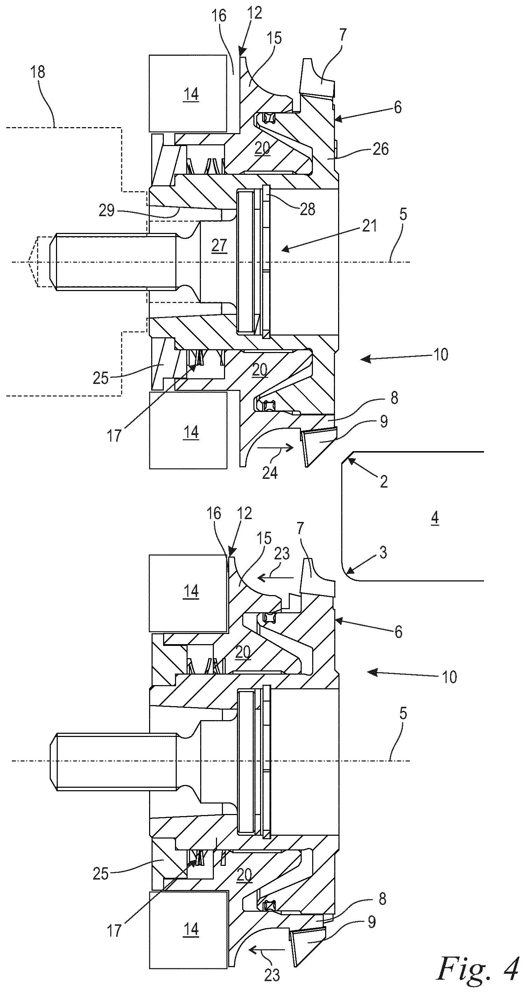

Fig. 1 zeigt in einer perspektivischen Ansicht den Arbeitsbereich einer erfindungsgemäß ausgeführten Werkzeugeinheit 1. Die Werkzeugeinheit 1 ist zum Bearbeiten von in Fig. 4 dargestellten Kanten 2, 3 eines Werkstückes 4 ausgelegt und vorgesehen, wobei bevorzugt Holz und holzartige Werkstoffe wie Spanplatten mit oder ohne Beschichtung bearbeitet werden. Die Werkzeugeinheit 1 erstreckt sich in allgemein konzentrischer Bauweise entlang einer Drehachse 5 und umfasst einen Werkzeugkopf 10, einen Antriebsmotor 11 zum drehenden Antrieb des Werkzeugkopfes um die Drehachse 5 sowie einen Schaltantrieb 12 für den Werkzeugkopf 10, mittels dessen der Werkzeugkopf 10 in verschiedene Schaltzustände zur Erzeugung verschiedener Kanten 2, 3 (Fig. 4) mit unterschiedlichen Kantenprofilen gebracht werden kann.

Hierzu weist der Werkzeugkopf 10 einen ersten Werkzeugabschnitt 6 mit einem Satz von über den Umfang verteilten ersten Schneiden 7 sowie einen zweiten Werkzeugabschnitt 8 mit einem Satz von über den Umfang verteilten zweiten Schneiden 9 auf. Die ersten Schneiden 7 und die zweiten Schneiden 9 weisen voneinander abweichende Schneidenprofile auf, wobei im gezeigten Ausführungsbeispiel die ersten Schneiden 7 ein konkaves Profil in Form eines Kreisabschnittes aufweisen, während die zweiten Schneiden 9 mit einem geradlinigen, zur Drehachse 5 abgewinkelten Schneidenprofil versehen sind, welches hier beispielhaft in einem 45°-Winkel zur Drehachse 5 liegt. Im Rahmen der Erfindung können aber auch andere Schneidenprofile für die ersten Schneiden 7 und die zweiten Schneiden 9 zum Einsatz kommen.

Jedenfalls sind die zweiten Schneiden 9 in Umfangsrichtung gesehen zwischen den ersten Schneiden 7 positioniert, wobei der zweite Werkzeugabschnitt 8 relativ zum ersten Werkzeugabschnitt 6 in Richtung der Drehachse 5 mittels des Schaltantriebes 12 zwischen einer passiven Position und einer aktiven Position entsprechend einem Doppelpfeil 22 hin und her verfahrbar ist.

Gemäß der Erfindung umfasst der Schaltantrieb 12 mindestens einen Elektromagneten 14 und einen im Wirkungsbereich des Elektromagneten 14 angeordneten Betätigungsanker 15 aus einem magnetisch anziehbaren Material. Mit dem Begriff "Wirkungsbereich" ist hier gemeint, dass der Elektromagnet 14 bei entsprechender Betätigung derart auf den Betätigungsanker 15 einwirkt, dass dieser gemeinsam mit dem zweiten Werkzeugabschnitt 8 in Richtung der Drehachse 5 verschoben wird, so dass sich dessen Schaltposition verändert. Hierzu ist der mindestens eine Elektromagnet 14 in axialer Richtung, also in Richtung der Drehachse 5 zwischen dem Werkzeugkopf 10 und dem angrenzenden stirnseitigen Ende des Antriebsmotors 11 positioniert. Außerdem ist der mindestens eine Elektromagnet 14 mit Befestigungsmitteln 19 versehen, welche hier als Schraubflansch ausgebildet sind und mittels derer der Elektromagnet 14 drehfest an einem Gehäuseteil 13 des Antriebsmotors 11 befestigt ist. Andererseits ist der Betätigungsanker 15 mit dem zweiten Werkzeugabschnitt 8 drehfest verbunden, dreht sich also mit diesem bzw. als Teil der Werkzeugeinheit 1 im Betrieb um die Drehachse 5 relativ zum stillstehenden Elektromagneten 14 bzw. zum stillstehenden Gehäuseteil 13 des Antriebsmotors 11.

Die Fig. 2, 3 zeigen in einer Seitenansicht die Werkzeugeinheit 1 nach Fig. 1 in unterschiedlichen Schaltzuständen, wobei hier gleiche Merkmale mit gleichen Bezugszeichen versehen sind. In Fig. 2 ist ein Schaltzustand gezeigt, bei dem der zweite Werkzeugabschnitt 8 einschließlich seiner zweiten Schneide 9 und des Betätigungsankers 15 mittels des Schaltantriebes 12 bzw. des Elektromagneten 14 relativ zum in axialer Richtung feststehenden ersten Werkzeugabschnitt 6 in Richtung eines Pfeils 23 zurückgezogen ist. In dieser passiven Position sind die zweiten Schneiden 9 gegenüber den ersten Schneiden 7 in Richtung der Drehachse 5 entsprechend dem Pfeil 23 axial zurückgezogen. Trotz der hierbei eingetretenen größtmöglichen axialen Annäherung verbleibt zwischen dem Elektromagneten 14 und dem Betätigungsanker 15 ein Spalt 16, so dass beide Bauteile berührungsfrei sind. Das Spaltmaß des Spaltes 16 liegt in der gezeigten passiven Position vorteilhaft in einem Bereich von etwa 0,5 mm, wobei zweckmäßig ein Bereich von 0,2 mm bis 1,0 mm in Betracht kommt.

Im Unterschied dazu ist in Fig. 3 der Schaltzustand gezeigt, bei dem sich der zweite Werkzeugabschnitt 8 einschließlich seiner zweiten Schneiden 9 und des Betätigungsankers 15 in einer aktiven Position befindet. Ausgehend von der passiven Position nach Fig. 2 hat die genannte Baueinheit also eine axiale Verschiebung vom Elektromagneten 14 fortweisend in Richtung eines Pfeiles 24 erfahren. Der Verfahrweg ist so gewählt, dass die zweiten Schneiden 9 mit dem geradlinigen Schneidenprofil in der aktiven Position gemäß Fig. 3 zwischen den ersten, konkaven Schneiden 7 hindurch in Richtung des Pfeiles 24 axial hervorstehen. Der hierfür erforderliche Verfahrweg liegt vorteilhaft in einem Bereich von etwa 2 bis 4 mm, wobei das Spaltmaß des Spaltes 16 gegenüber der passiven Position nach Fig. 2 um die Größe des Verfahrweges zugenommen hat. Jedenfalls wird deutlich, dass zwischen dem mindestens einen Elektromagneten 14 und dem Betätigungsanker 15 sowohl in der passiven Position als auch in der aktiven Position der Spalt 16 mit einem Spaltmaß von > 0 verbleibt.

Der Darstellung nach den Fig. 1 bis 3 ist entnehmbar, dass die Werkzeugeinheit 1 im Wesentlichen aus zwei Abschnitten besteht, nämlich einerseits aus dem Antriebsmotor 11 und andererseits aus einem schaltbaren Werkzeugsystem, welches den zuvor beschriebenen Werkzeugkopf 10 sowie den ebenfalls zuvor beschriebenen Schaltantrieb 12 umfasst. Das schaltbare Werkzeugsystem ist insgesamt an nur einer axialen Stirnseite des Antriebsmotors 11 positioniert und befestigt, so dass lediglich entsprechende Befestigungsschnittstellen, nicht jedoch konstruktive Eingriffe in den Antriebsmotor 11 als solchen erforderlich sind. Es kann ein gewöhnlicher, handelsüblicher Antriebsmotor 11 gewählt oder sogar nachgerüstet werden, wobei dann an nur einem stirnseitigen Ende davon das schaltbare Werkzeugsystem mit dem Werkzeugkopf 10 und dem Schaltantrieb 12 zu montieren ist.

Zur Verdeutlichung weiterer konstruktiver Einzelheiten zeigt Fig. 4 das genannte schaltbare Werkzeugsystem nach den Fig. 1 bis 3 in einer Schnittdarstellung, wobei zum besseren Verständnis zwei identische schaltbare Werkzeugsysteme dargestellt sind, die sich bei identischem konstruktivem Aufbau lediglich in ihrem Schaltzustand unterscheiden. Demnach umfasst der Werkzeugkopf 10 einen Zentralkörper 26, an welchem einteilig der erste Werkzeugabschnitt 6 mit den daran befestigten ersten Schneiden 7 ausgebildet ist. Zur Bildung einer Befestigungsschnittstelle 21 mit einer Antriebswelle 18 des Antriebsmotors 11 (Fig. 1 bis 3) ist im Zentralkörper 26 ein konischer Sitz 29 ausgeformt, welcher im montierten Zustand auf einem Spannkonus der Antriebswelle 18 zu liegen kommt. Teil der Befestigungsschnittstelle 21 ist außerdem eine zentrale Spannschraube 27, welche lose im Zentralkörper 26 mittels eines Sicherungsringes 28 fixiert ist und zur Montage in eine stirnseitige Gewindebohrung der Antriebswelle 18 eingedreht wird. Hierüber wird der Werkzeugkopf 10 mittels seines Zentralkörpers 26 auf den Spannkonus der Antriebswelle 18 aufgezogen, so dass sich eine zentrierte, drehfeste Einheit aus dem Werkzeugkopf 10 und der Antriebswelle 18 bildet. Weitere Befestigungen bzw. Lagerungen des Werkzeugkopfes 10 sind weder erforderlich noch vorgesehen. Der Werkzeugkopf 10 ist ausschließlich über die Antriebswelle 18 gelagert und im Übrigen gegenüber dem Elektromagneten 14 berührungsfrei.

Der gegenüber dem feststehenden ersten Werkzeugabschnitt 6 in axialer Richtung verschiebbare zweite Werkzeugabschnitt 8 weist einen Grundkörper 20 auf, an dem die zweiten Schneiden 9 befestigt sind. In oder an diesem Grundkörper 20 können einzelne Elemente aus einem magnetisch anziehbaren Material angeordnet, befestigt oder eingebettet sein, um auf diese Weise den Betätigungsanker 15 zu bilden. Hierbei kann es sich um Permanentmagnete handeln. In der gezeigten bevorzugten Ausführungsform besteht der Betätigungsanker 15 insgesamt aus einem weichmagnetischen Material, namentlich aus Werkzeugstahl, und ist einteilig mit dem Grundkörper 20 ausgebildet. Korrespondierend zum Betätigungsanker 15 können mehrere Elektromagnete 14 insbesondere konzentrisch um die Drehachse 5 herum angeordnet werden. Im gezeigten bevorzugten Ausführungsbeispiel ist der Elektromagnet 14 als Ringmagnet ausgeführt, während der Betätigungsanker 15 korrespondierend dazu ebenfalls ringförmig ausgestaltet ist. Der Grundkörper 20 mit dem angeformten Betätigungsanker 15 und auch der als Ringmagnet ausgeführte Elektromagnet 14 sind konzentrisch zur Drehachse 5 positioniert, wodurch eine kompakte, kippfreie Bauform entsteht.

An seinem dem elektrischen Antriebsmotor 11 zugewandten Ende trägt der Zentralkörper 26 ein umlaufendes Druckstück 25, an welchem sich ein Druckfederelement 17 abstützt. Das Druckfederelement 17 kann eine Anordnung aus mehreren über den Umfang verteilten Schraubendruckfedern, ein Tellerfederpaket oder dergleichen sein und ist im gezeigten Ausführungsbeispiel eine konzentrisch zur Drehachse 5 angeordnete Wellenfeder. In Gegenrichtung ist das Druckfederelement 17 gegen eine Stirnfläche des zweiten Werkzeugabschnitts 8 abgestützt und mit einer axialen Druckvorspannung versehen. Infolge dieser axialen Druckvorspannung wird der zweite Werkzeugabschnitt 8 entsprechend dem Pfeil 24 vom Schaltantrieb 12 fortweisend in seine aktive Position vorgespannt und gedrückt. Im oberen Teil der Fig. 4 ist der Elektromagnet 14 passiv, also unbestromt, so dass er keine axiale Betätigungskraft auf den Betätigungsanker 15 ausübt. Folglich führt die Vorspannkraft des Druckfederelementes 17 dazu, dass der zweite Werkzeugabschnitt 8 in Richtung des Pfeiles 24 verschoben ist und dabei seine aktive Position einnimmt. Im Übrigen wird diese aktive Position durch die genannte Vorspannkraft des Federelementes 17 eingehalten, so dass eine separate Verriegelung nicht erforderlich ist. Jedenfalls stehen in dieser aktiven Position die zweiten Schneiden 9 zwischen den ersten Schneiden 7 hindurch axial so weit hervor, dass sie am Werkstück 4 eine Kante 2 entsprechend dem Schneidenprofil der zweiten Schneiden 9, hier also in Form einer 45°-Fase, ausbilden.

Sofern jedoch am Elektromagneten 14 eine geeignete Versorgungsspannung angelegt und dieser dadurch mit Strom versorgt wird, übt der Elektromagnet 14 eine axiale Anziehungskraft auf den Betätigungsanker 15 und damit auf den zweiten Werkzeugabschnitt 8 insgesamt aus. Der Elektromagnet 14 und der Betätigungsanker 15 sind derart dimensioniert bzw. ausgelegt, dass diese Anziehungskraft ausreicht, die Druckvorspannkraft des Druckfederelementes 17 zu überwinden. Dieser Zustand ist im unteren Teil der Fig. 4 gezeigt, wobei der zweite Werkzeugabschnitt 8 gegen einen Anschlag am Druckstück 25 in die zuvor schon beschriebene passive Position zurückgezogen und dort durch die Anziehungskraft des Elektromagneten 14 gehalten ist. In dieser zurückgezogenen passiven Position sind die zweiten, geradlinigen Schneiden 9 gegenüber den ersten, konkaven Schneiden 7 axial zurückgezogen, so dass der Werkzeugkopf 10 am Werkstück 4 eine Kante 3 mit einem korrespondierenden, hier gerundeten Profil erzeugt.

Die Umschaltung zwischen der aktiven und der passiven Position und damit die Umschaltung zwischen den unterschiedlichen Fräsprofilen der zu erzeugenden Kanten 2, 3 erfolgt allein durch das Wechselspiel des nach Wahl ein- oder ausgeschalteten Elektromagneten 14, des Betätigungsankers 15 und des bevorzugt zum Einsatz kommenden Druckfederelementes 17.

## Patentansprüche

1. Werkzeugeinheit (1) zum Bearbeiten von Kanten (2, 3) eines Werkstückes (4), welche sich entlang einer Drehachse (5) erstreckt, umfassend einen sich entlang einer Drehachse (5) erstreckenden Werkzeugkopf (10), einen Antriebsmotor (11) zum drehenden Antrieb des Werkzeugkopfes (10) um die Drehachse (5) sowie einen Schaltantrieb (12) für den Werkzeugkopf (10), wobei der Werkzeugkopf (10) einen ersten Werkzeugabschnitt (6) mit einem Satz von über den Umfang verteilten ersten Schneiden (7) und einen zweiten Werkzeugabschnitt (8) mit einem Satz von über den Umfang verteilten zweiten Schneiden (9) aufweist, wobei die zweiten Schneiden (9) in Umfangsrichtung gesehen zwischen den ersten Schneiden (7) positioniert sind, wobei der zweite Werkzeugabschnitt (8) relativ zum ersten Werkzeugabschnitt (6) in Richtung der Drehachse (5) mittels des Schaltantriebes (12) zwischen einer passiven Position und einer aktiven Position hin und her verfahrbar ist, wobei die zweiten Schneiden (9) in der passiven Position gegenüber den ersten Schneiden (7) axial zurückgezogen sind und wobei die zweiten Schneiden (9) in der aktiven Position zwischen den ersten Schneiden (7) hindurch axial hervorstehen,
**dadurch gekennzeichnet, dass** der Schaltantrieb (12) mindestens einen Elektromagneten (14) und einen im Wirkungsbereich des Elektromagneten (14) angeordneten Betätigungsanker (15) aus einem magnetisch anziehbaren Material umfasst, wobei der mindestens eine Elektromagnet (14) in axialer Richtung zwischen dem Werkzeugkopf (10) und dem Antriebsmotor (11) positioniert und an einem Gehäuseteil (13) des Antriebsmotors (11) drehfest befestigt ist, wobei der Betätigungsanker (15) mit dem zweiten Werkzeugabschnitt (8) fest verbunden ist und wobei zwischen dem mindestens einen Elektromagneten (14) und dem Betätigungsanker (15) sowohl in der passiven Position als auch in der aktiven Position ein Spalt (16) verbleibt.

2. Werkzeugeinheit nach Anspruch 1,
**dadurch gekennzeichnet, dass** der Betätigungsanker (15) aus einem weichmagnetischen Material gefertigt ist.

3. Werkzeugeinheit nach Anspruch 1 oder 2,
**dadurch gekennzeichnet, dass** der zweite Werkzeugabschnitt (8) mittels eines Druckfederelementes (17) vom Schaltantrieb (12) fortweisend in Richtung der aktiven Position vorgespannt ist und dass der Schaltantrieb (12) dazu ausgelegt ist, den zweiten Werkzeugabschnitt (8) gegen die Vorspannkraft des Druckfederelementes (17) aus der aktiven Position in die passive Position anzuziehen.

4. Werkzeugeinheit nach Anspruch 3,
**dadurch gekennzeichnet, dass** das Druckfederelement (17) als konzentrisch zur Drehachse (5) angeordnete Wellenfeder ausgebildet ist.

5. Werkzeugeinheit nach einem der Ansprüche 1 bis 4,
**dadurch gekennzeichnet, dass** der Elektromagnet (14) als Ringmagnet ausgeführt ist, dass der Betätigungsanker (15) korrespondierend zum Ringmagnet ringförmig gestaltet ist und dass der Ringmagnet sowie der ringförmige Betätigungsanker (15) konzentrisch zur Drehachse (5) angeordnet sind.

6. Werkzeugeinheit nach einem der Ansprüche 1 bis 5,
**dadurch gekennzeichnet, dass** der Werkzeugkopf (10) ausschließlich an einer Antriebswelle (18) des Antriebsmotors (11) befestigt ist und dass der Werkzeugkopf (10) und der Elektromagnet (14) berührungsfrei sind.

7. Werkzeugeinheit nach einem der Ansprüche 1 bis 6,
**dadurch gekennzeichnet, dass** der zweite Werkzeugabschnitt (8) einen Grundkörper (20) aufweist und dass der Grundkörper (20) und der Betätigungsanker (15) einteilig aus dem magnetisch anziehbaren Material ausgebildet sind.

8. Schaltbares Werkzeugsystem für eine Werkzeugeinheit (1) nach einem der Ansprüche 1 bis 7, umfassend einen Werkzeugkopf (10) sowie einen Schaltantrieb (12), wobei sich der Werkzeugkopf (10) entlang einer Drehachse (5) erstreckt und einen ersten Werkzeugabschnitt (6) mit einem Satz von über den Umfang verteilten ersten Schneiden (7) sowie einen zweiten Werkzeugabschnitt (8) mit einem Satz von über den Umfang verteilten zweiten Schneiden (9) aufweist, wobei die zweiten Schneiden (9) in Umfangsrichtung gesehen zwischen den ersten Schneiden (7) positioniert sind, wobei der zweite Werkzeugabschnitt (8) relativ zum ersten Werkzeugabschnitt (6) in Richtung der Längsachse (5) mittels des Schaltantriebes (12) zwischen einer passiven Position und einer aktiven Position hin und her verfahrbar ist, wobei die zweiten Schneiden (9) in der passiven Position gegenüber den ersten Schneiden (7) axial zurückgezogen sind und wobei die zweiten Schneiden (9) in der aktiven Position zwischen den ersten Schneiden (7) hindurch axial hervorstehen,
**dadurch gekennzeichnet, dass** der Schaltantrieb (12) einen Betätigungsanker (15) aus einem magnetisch anziehbaren Material und mindestens einen auf den Betätigungsanker (15) einwirkenden Elektromagneten (14) umfasst, wobei der mindestens eine Elektromagnet (14) Befestigungsmittel (19) zur drehfesten Befestigung an einem Gehäuseteil (13) eines Antriebsmotors (11) in einer axialen Position zwischen dem Werkzeugkopf (10) und dem Antriebsmotor (11) aufweist, wobei der Betätigungsanker (15) mit dem zweiten Werkzeugabschnitt (8) fest verbunden ist und wobei der Werkzeugkopf (10) eine Befestigungsschnittstelle (21) zur Befestigung an einer Antriebswelle (18) des Antriebsmotors (11) aufweist.

## Claims

1. Tool unit (1) for machining edges (2, 3) of a workpiece (4), which extends along an axis of rotation (5), comprising a tool head (10) extending along an axis of rotation (5), a drive motor (11) for rotational driving of the tool head (10) about the axis of rotation (5), and a switch drive (12) for the tool head (10), wherein the tool head (10) comprises a first tool portion (6) having a set of first blades (7) distributed over the periphery and a second tool portion (8) having a set of second blades (9) distributed over the periphery, wherein the second blades (9) are positioned between the first blades (7), viewed in the peripheral direction, wherein the second tool portion (8) is displaceable relative to the first tool portion (6), in the direction of the axis of rotation (5), by means of the switch drive (12), back and forth between a passive position and an active position, wherein the second blades (9) are axially retracted relative to the first blades (7), in the passive position, and wherein the second blades (9) protrude axially between the first blades (7), in the active position,
**characterised in that** the switch drive (12) comprises at least one electromagnet (14) and an actuation armature (15) that is made of a magnetically attractable material and is arranged in the effective range of the electromagnet (14), wherein the at least one electromagnet (14) is positioned between the tool head (10) and the drive motor (11), in the axial direction, and is non-rotatably fastened to a housing part (13) of the drive motor (11), wherein the actuation armature (15) is rigidly connected to the second tool portion (8) and wherein a gap (16) remains between the at least one electromagnet (14) and the actuation armature (15), both in the passive position and in the active position.

2. Tool unit according to claim 1,
**characterised in that** the actuation armature (15) is produced from a magnetically soft material.

3. Tool unit according to either claim 1 or claim 2,
**characterised in that** the second tool portion (8) is preloaded by means of a compression spring element (17), facing out from the switching drive (12), in the direction of the active position, and that the switch drive (12) is designed to draw the second tool portion (8) out of the active position into the passive position, against the preload force of the compression spring element (17).

4. Tool unit according to claim 3,
**characterised in that** the compression spring element (17) is designed as a wave spring that is arranged concentrically to the axis of rotation (5).

5. Tool unit according to any of claims 1 to 4,
**characterised in that** the electromagnet (14) is designed as an annular magnet, that the actuation armature (15) is designed annularly, corresponding to the annular magnet, and that the annular magnet and the annular actuation armature (15) are arranged concentrically to the axis of rotation (5).

6. Tool unit according to any of claims 1 to 5,
**characterised in that** the tool head (10) is fastened exclusively to a drive shaft (18) of the drive motor (11), and that the tool head (10) and the electromagnet (14) are contact-free.

7. Tool unit according to any of claims 1 to 6,
**characterised in that** the second tool portion (8) comprises a main body (20) and that the main body (20) and the actuation armature (15) are formed integrally from the magnetically attractable material.

8. Switchable tool system for a tool unit (1) according to any of claims 1 to 7, comprising a tool head (10) and a switch drive (12), wherein the tool head (10) extends along an axis of rotation (5) and comprises a first tool portion (6) having a set of first blades (7) distributed over the periphery, and a second tool portion (8) having a set of second blades (9) distributed over the periphery, wherein the second blades (9) are positioned between the first blades (7), viewed in the peripheral direction, wherein the second tool portion (8) is displaceable relative to the first tool portion (6), in the direction of the longitudinal axis (5), by means of the switch drive (12), back and forth between a passive position and an active position, wherein the second blades (9) are axially retracted relative to the first blades (7), in the passive position, and wherein the second blades (9) protrude axially between the first blades (7), in the active position,
**characterised in that** the switch drive (12) comprises an actuation armature (15) that is made of a magnetically attractable material and at least one electromagnet (14) that acts on the actuation armature (15), wherein the at least one electromagnet (14) comprises fastening means (19) for non-rotatable fastening to a housing part (13) of a drive motor (11) in an axial position between the tool head (10) and the drive motor (11), wherein the actuation armature (15) is rigidly connected to the second tool portion (8), and wherein the tool head (10) comprises a fastening interface (21) for fastening to a drive shaft (18) of the drive motor (11).

## Revendications

1. Unité d'outil (1) pour l'usinage d'arêtes (2, 3) d'une pièce (4), laquelle s'étend le long d'un axe de rotation (5), comprenant une tête d'outil (10) s'étendant le long d'un axe de rotation (5), un moteur d'entraînement (11) pour entraîner en rotation la tête d'outil (10) autour de l'axe de rotation (5), ainsi qu'un entraînement de commutation (12) pour la tête d'outil (10), dans laquelle la tête d'outil (10) présente une première section d'outil (6) avec un ensemble de premiers tranchants (7) répartis sur la périphérie et une seconde section d'outil (8) avec un ensemble de seconds tranchants (9) répartis sur la périphérie, dans laquelle les seconds tranchants (9) sont positionnés entre les premiers tranchants (7) vus dans la direction périphérique, dans laquelle la seconde section d'outil (8) peut être déplacée en va-et-vient entre une position passive et une position active au moyen de l'entraînement de commutation (12) en direction de l'axe de rotation (5) par rapport à la première section d'outil (6), dans laquelle les seconds tranchants (9) sont rétractés axialement par rapport aux premiers tranchants (7) dans la position passive, et dans laquelle les seconds tranchants (9) font saillie axialement entre les premiers tranchants (7) dans la position active,
**caractérisée en ce que** l'entraînement de commutation (12) comprend au moins un électroaimant (14) et un induit d'actionnement (15) en un matériau pouvant être attiré magnétiquement disposé dans la zone d'action de l'électroaimant (14), dans laquelle l'au moins un électroaimant (14) est positionné dans la direction axiale entre la tête d'outil (10) et le moteur d'entraînement (11) et est fixé de manière solidaire en rotation sur une partie de boîtier (13) du moteur d'entraînement (11), dans laquelle l'induit d'actionnement (15) est relié de manière fixe à la seconde section d'outil (8) et dans laquelle une fente (16) subsiste entre l'au moins un électroaimant (14) et l'induit d'actionnement (15) à la fois dans la position passive et dans la position active.

2. Unité d'outil selon la revendication 1,
**caractérisée en ce que** l'induit d'actionnement (15) est fabriqué à partir d'un matériau magnétique doux.

3. Unité d'outil selon la revendication 1 ou 2,
**caractérisée en ce que** la seconde section d'outil (8) est précontrainte au moyen d'un élément de ressort de compression (17) tout en s'éloignant de l'entraînement de commutation (12) en direction de la position active et que l'entraînement de commutation (12) est conçu pour attirer la seconde section d'outil (8) à l'encontre de la force de précontrainte de l'élément de ressort de compression (17) depuis la position active dans la position active.

4. Unité d'outil selon la revendication 3,
**caractérisée en ce que** l'élément ressort de compression (17) est réalisé comme un ressort ondulé disposé concentriquement par rapport à l'axe de rotation (5).

5. Unité d'outil selon l'une quelconque des revendications 1 à 4,
**caractérisée en ce que** l'électroaimant (14) est réalisé comme un aimant annulaire, que l'induit d'actionnement (15) est configuré avec une forme annulaire de manière à correspondre à l'aimant annulaire et que l'aimant annulaire ainsi que l'induit d'actionnement (15) annulaire sont disposés concentriquement par rapport à l'axe de rotation (5).

6. Unité d'outil selon l'une quelconque des revendications 1 à 5,
**caractérisée en ce que** la tête d'outil (10) est fixée exclusivement sur un arbre d'entraînement (18) du moteur d'entraînement (11) et que la tête d'outil (10) et l'électroaimant (14) sont sans contact.

7. Unité d'outil selon l'une quelconque des revendications 1 à 6,
**caractérisée en ce que** la seconde section d'outil (8) présente un corps de base (20) et que le corps de base (20) et l'induit d'actionnement (15) sont réalisés d'un seul tenant à partir du matériau pouvant être attiré magnétiquement.

8. Système d'outil pouvant être commuté pour une unité d'outil (1) selon l'une quelconque des revendications 1 à 7, comprenant une tête d'outil (10) ainsi qu'un entraînement de commutation (12), dans lequel la tête d'outil (10) s'étend le long d'un axe de rotation (5) et présente une première section d'outil (6) avec un ensemble de premiers tranchants (7) répartis sur la périphérie ainsi qu'une seconde section d'outil (8) avec un ensemble de seconds tranchants (9) répartis sur la périphérie, dans lequel les seconds tranchants (9) sont positionnés entre les premiers tranchants (7) vus dans la direction périphérique, dans lequel la seconde section d'outil (8) peut être déplacée, par rapport à la première section d'outil (6), en va-et-vient entre une position passive et une position active au moyen de l'entraînement de commutation (12) dans la direction de l'axe longitudinal (5), dans lequel les seconds tranchants (9) sont rétractés axialement par rapport aux premiers tranchants (7) dans la position passive, et dans lequel les seconds tranchants (9) font saillie axialement entre les premiers tranchants (7) dans la position active,
**caractérisé en ce que** l'entraînement de commutation (12) comprend un induit d'actionnement (15) en un matériau pouvant être attiré magnétiquement et comprend au moins un électroaimant (14) agissant sur l'induit d'actionnement (15), dans lequel l'au moins un électroaimant (14) présente des moyens de fixation (19) destinés à être fixés de manière solidaire en rotation sur une partie de boîtier (13) d'un moteur d'entraînement (11) dans une position axiale entre la tête d'outil (10) et le moteur d'entraînement (11), dans lequel l'induit d'actionnement (15) est relié fixement à la seconde section d'outil (8) et dans lequel la tête d'outil (10) présente une interface de fixation (21) destinée à être fixée sur un arbre d'entraînement (18) du moteur d'entraînement (11).
